# EUROPEAN PATENT SPECIFICATION

(11) **EP 1 452 773 B1**
(45) Date of publication and mention of the grant of the patent: **21.11.2012**
(21) Application number: 03425130.6
(22) Date of filing: 28.02.2003
(51) Int. Cl.: F16H 3/72

(54) **Kinematic mechanism for reduction gear and continuous transmission**
Kinematisches Mechanismus eines Untersetzungsgetriebes und eines stufenlosen Getriebes
Mécanisme cinématique de réducteurs et transmission variable en continu

(43) Date of publication of application: 01.09.2004
(73) Proprietor: La Guardia, Francesco, Sarno (IT)
(72) Inventor: La Guardia, Francesco, Sarno (IT)

(56) References cited:
- DE-A- 19 631 670
- DE-C- 489 902
- FR-A- 1 341 321
- US-A- 759 157
- US-A- 2 881 639
- US-A- 4 532 828
- US-A- 4 700 589
- US-A- 5 106 353

## Description

### BACKGROUND OF THE INVENTION

This invention relates to the mechanical field of general mechanics.

US patent 4532828, discloses a kinematic mechanism including:
- a cross-brace with four radial axles (11);
- two groups of satellite pinions (13,15), one (13) of them is central and interacts with two side gears (19, 20), and the other (15) is peripheral and interacts with two crown wheel plates (17, 18), these groups are close in a holding ring (16) and rotate on a perpendicular level with respect to the axis of a driving and a driven two shafts (21-22);
- said two crown wheel plates (17,18), one of them (17) is driving and the other (18) is driven; the driving shaft (21) on which a side gear (19) is keyed, supporting the driving crown wheel plate (17), concentric with it and revolving in the hub of the latter;
the driven shaft (22), on which a second side gear (20) is keyed, axis coinciding with the driving shaft (21) supporting the driven crown wheel plate (18) concentric with it and revolving in the hub of the latter.

At the present state of technique, in a rotary motion system, the velocity ratio, from the driving shaft to the driven shaft, is given by the ratio of the product of the numbers of teeth of the driving gears and that of the numbers of teeth of the driven gears.

But no kind of reduction gear (or overgear) exists, in which the reduction of revolutions, from the driving shaft to the driven shaft, is given by the difference between the product of the numbers of teeth of the driving gears and that of the numbers of teeth of the driven gears.

With the present invention, illustrated in details in this patent, we want to show not only that what has been affirmed above is true but also how it is possible to obtain, in a very simple way, whatever reduction needed by special practical applications and by the assembly technique.

The change gear, presently used, either continuous or discontinuous, is a simple reduction gear. It has not been possible to eliminate reduction pairs, which modify the driving moment and the resistant moment.

We know, from the laws of mechanics, that in the transmission of the rotary motion, the engine force and the speed of the vehicle are inversely proportional. That means that in order to increase the transmitted force, the velocity of the vehicle must decrease and viceversa, as it is commonly observed, when you perform shifting in your car.

At the present state of technique, no kind of transmission exists in which the developed force, under the same engine speed, is directly proportional to the acceleration of the vehicle, as the fundamental equation of dynamics shows: (F= m X a).

With this state of things, in order to solve this problem never faced before, the elimination of the kinematic pairs cannot be left out of consideration.

With the present invention we want not only to reach this goal, but we also want to solve many other problems of mechanics. It must be observed that in the transmission of the rotary motion, the force produced by the engine and the velocity of the vehicle should be in continuous dynamic balance. The modem automatic transmissions, which quite all use the centrifugal force of an intermediate fluid are designed for this purpose. In practice they do not only balance anything, but they increase the unbalance. In fact the sliding action and the internal friction of the fluid, cause a big dispersion of thermic energy of the engine and so they need a bigger consumption of fuel while decreasing the mechanic efficiency. They are also heavy, cumbersome, complicated, expensive and they cannot be fixed to all vehicles.

With the present invention we want to solve this problem, by using the present mechanism, which is better described later and which, under the same velocity of the engine, it allows to keep the drive force constant, so letting the velocity of a vehicle or a flywheel fixed to the driven shaft, for whatever use or machine, continuously vary.

Taking into account the fundamental equation of dynamics and the functional characteristics of the mechanism, we can deduce that the latter can be successfully applied to electricity generators by exploiting the huge mass of the river water, of the winds, of the sea current etc... So a big mass will be used with a little velocity and not viceversa, as now it happens with the hydroelectric plants.

It would be right to devote more studies and researches to this field.

### DESCRIPTIONS OF DRAWINGS

FIG.1 is a sectional view showing a cruciform set and other basic components of the present kinematic device;

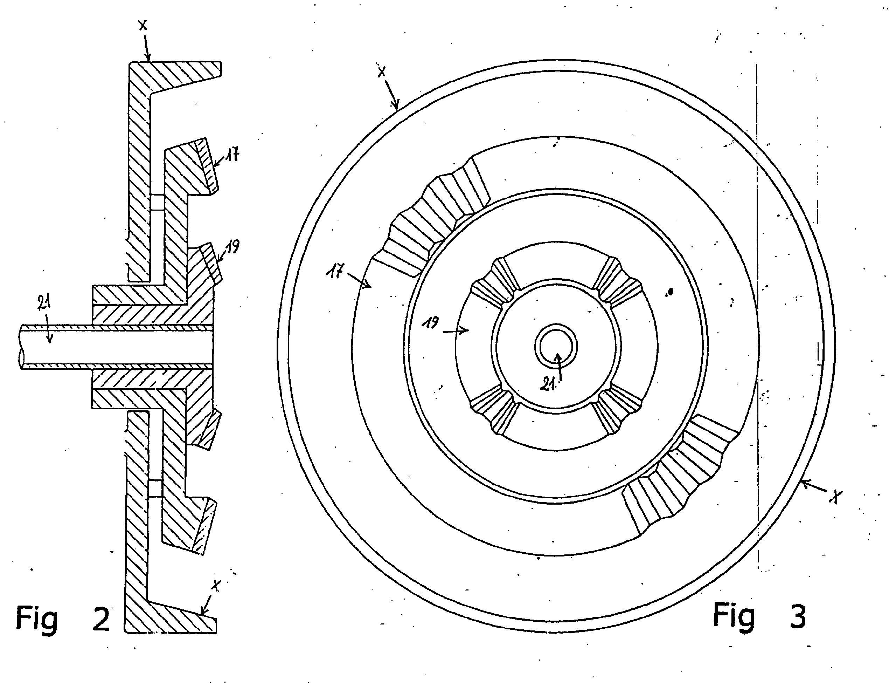

FIG.2 is a reduced sectional view through a single crown wheel plate, a single side gear and a single bearing cover showing their interrelationships;
FIG.3 is a diagrammatic end view as seen from the right in FIG.2.
FIG.4 is a longitudinal section taken through the present kinematic device particularly adapted as angular velocity reducer and a continuous automatic change gear.

This figure includes a rotary motion system with straight or helical teeth and a synchronizer for the normal gear pair coupling and gear pair during a steep slope as it is better described below.

It also includes a trapeziform belt pulley for the application of an electric coupling.

FIG. 5 is the front view of a chain drive system, with three pairs of cog wheels, to be applied to an angular velocity reducer, as it is better described below.

Fig.6 is the front view of a chain drive system, with four pairs of cog wheels; to be applied to an angular velocity reducer, as it is better described below.

### DETAILED DESCRIPTION

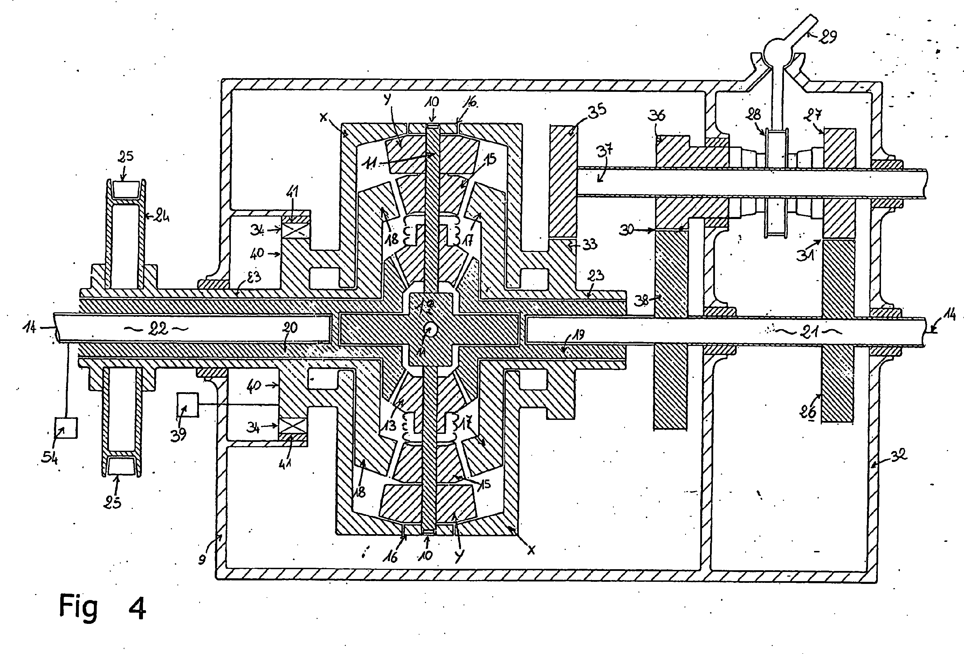

All the assembly is placed in the double housing 9 32 (FIG.4).

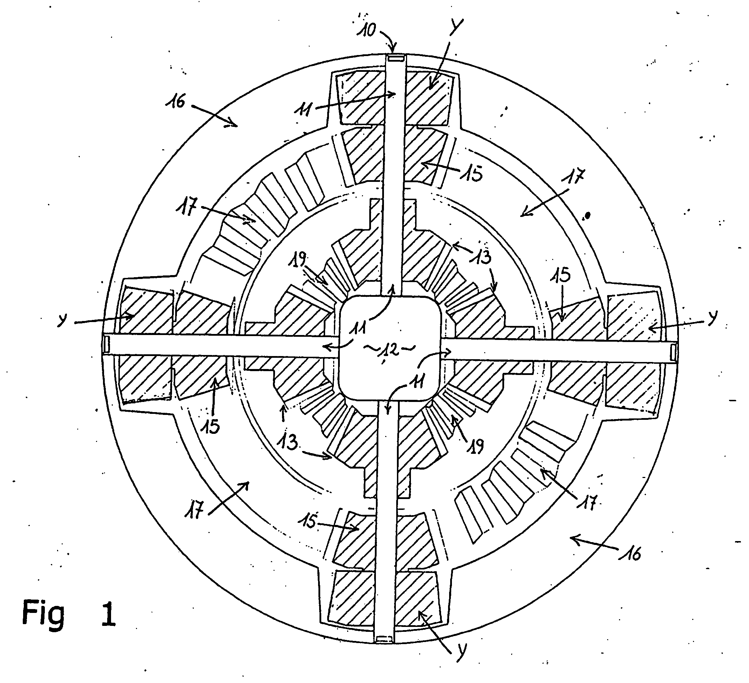

The kinematic mechanism is based on a double conical epicyclic train, called cruciform set (Fig.1).

It consists of a satellite cross brace 12 (FIG.14), including four radial right angle axes II. On the axes two conical groups rotate 13 and 15, each of them with four satellite pinions.

The satellite group 13 is central and is adjacent to the cross 12, while the peripheral group is adjacent to the holding ring 16. With letter X the two bearing covers (free or connected with the respective crown wheel plates) fit for supporting the weight of the cruciform set, are shown. With letter Y these bearings are shown. These groups revolve around the rotation axis 14 of the shafts 21 and 22 (FIG.4).

The central satellites 13 interact with two side gears, of which one 19 is keyed on the driving shaft 21 and the other 20 on the driven shaft 22.

So the side gear 19 is driving and the side gear 20 is driven.

The peripheral satellites 15 interact with two planetary crown wheel plates, of which one is driving 17 and the other 18 is driven (FIG.4).These crown wheel plates 17 and 18 are concentric with the side gears 19 and 20 and the latter, together with the shafts 21 and 22, pass through hubs 23.

Both satellite groups 13 and 15 are closed with a holding ring 16 with the covers X and the bearings Y (FIG. 1 4).

These satellites are disposed coaxially and revolve, on the same rotation level, with the cross 12, normally with respect to axis 14. They form a double conical, epicyclic train, that is they are fit for rotations and revolutions.

The complete assembly of the satellite cross brace 12, of the axes II, of the satellites 13 and 15 and of the holding ring 16 form a cruciform set, also used for change gear (FIG.4).

### MAIN CHARACTERISTICS

1) The crown wheel plates 17 and 18, as well as the side gears 19 and 20 and satellite pinions, can have any diameter with any even number of teeth with any pitch and module. The functioning will be unchanged.
2) The driving shaft 21, connected with the side gear 19 and the driven shaft 22, connected with the side gear 20, can turn in the same or in the opposite direction, as it will be shown below (FIG.4).
3) If the crown wheel plate 18 is kept immobile, the rotations pass, through the satellites 13, from the driving shaft 21 to the driven shaft 22.

Viceversa, if the driven shaft 22 is kept immobile, these rotations will pass to the crown wheel plate 18 which turns in the direction opposite to the driven shaft 22.

In this case, the force transmitted to the crown wheel plate 18 will decrease, which is directly proportional to the number of reductions.

4) The revolutions of the crown wheel plate 17 and those of the side gear 19, linked to the shaft 21, are always in proportion.

The crown wheel plate 18 and the side gear 20, linked to the shaft 22, are free and independent.

So the revolutions of the crown wheel plate 18 can be summed or subtracted from those of the driven shaft 22.

### RUNNING OF THE REDUCER

The gear train of the cog wheels 38 36 35 33, is shown with number 30. The gear train of the cog wheels 26 27 35, and 33 is shown with number 31 (FIG.4).

The wheels 38 and 26 are integral with the driving shaft 21 and so they are driving wheels. The wheels 36 and 27 are free rotating on the shaft 37 and the wheel 35 is integral with the latter. The synchronizer 28 is fit for making integral, with the shaft 37, the wheel 36 or the wheel 27.

Considering the wheel 36 integral with the shaft 37, coupled with the wheel 35, and considering immobile the crown wheel plate 18, it is to be observed as follows:
a): if the product of the number of teeth of the driving wheels 38 and 35 is higher than the product of the numbers of teeth of the driven wheels 36 and 33, the driving shaft 21 and the driven shaft 22 turn in the same direction.
b) If this product is lower than the numbers of teeth of the driven wheels, the driving shaft 21 and the driven shaft 22 turn in the opposite direction.
c) Taking into account what has been affirmed in a and b, the number of reductions on the driven shafts 22 varies of one unit.

For example: let us suppose that, in the gear train 30 (FIG.4), the product of the numbers of teeth of the driving wheels is 30 x 30 and that of the numbers of teeth of the driven wheels is 29 x 31, the reductions of revolutions, from the driving shaft 21 to the driven shaft 22, in this case, are equal to 899 and these shafts turn in the same direction.

The transmission of the rotation motion passes from the wheel 38, integral with the driving shaft 21, to the wheel 36, integral with the wheel 35, and, from the latter, to the wheel 33, integral with the crown wheel plate 17.

The difference of the product of the numbers of teeth of the driving wheels and that of the product of the numbers of teeth, of the driven wheels, will pass to the driven shaft 22, through the group of satellite central pinions 13.

Viceversa, if the product of the numbers of teeth of the driving wheels is 29 X 31 and that of the number of teeth of the driven wheels is 30 x 30, the reductions of revolutions, from the driving shaft 21 to the driven shaft 22, are equal to 900 , and these shafts turn in the opposite direction.

This occurs because two numbers, divided by their difference, produce other two numbers the difference of which is always one.

The present kinematic mechanism is very simple and allows high reductions for many uses and for all machines. In this description we consider only three solutions which are considered the most important and the easiest ones, compared with others which we do not consider it convenient to describe here. In fact another important reduction can be obtained by making the crown wheel plate 18 turn and the driven shaft 22 too at the same time in the opposite direction, while the crown wheel plate 17 and the driving shaft 21 will turn always in the same direction (FIG.4).

First solution: two gear pairs with straight or helical teeth, as it can be seen in the gear train 30 (FIG.4), with possible chain gearing, which is not reported in (FIG.4).

This solution has been already described above, so it is to be referred to the observations given above in a, b, and c.

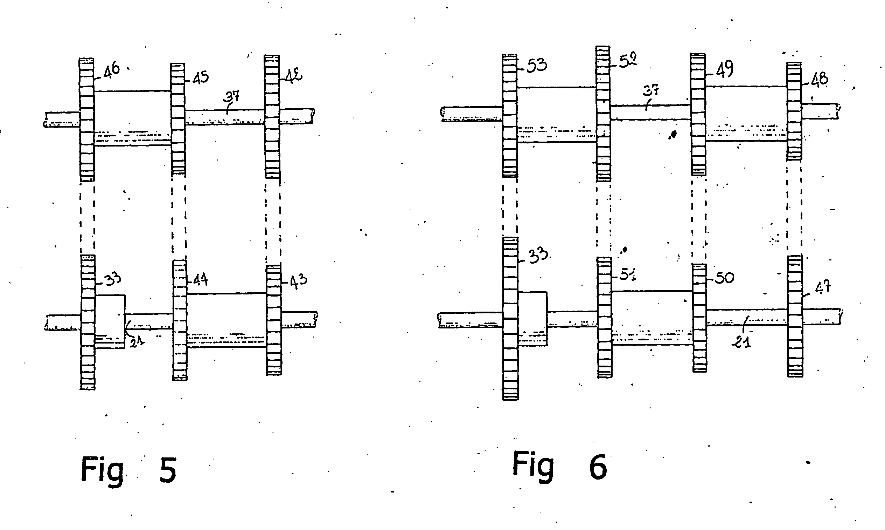

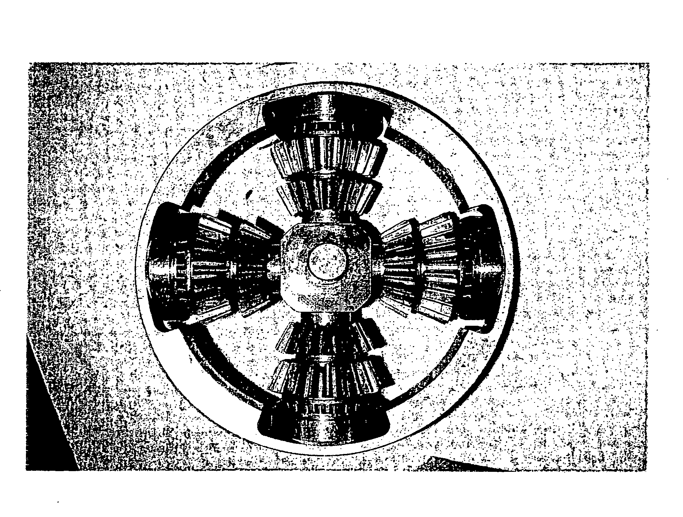

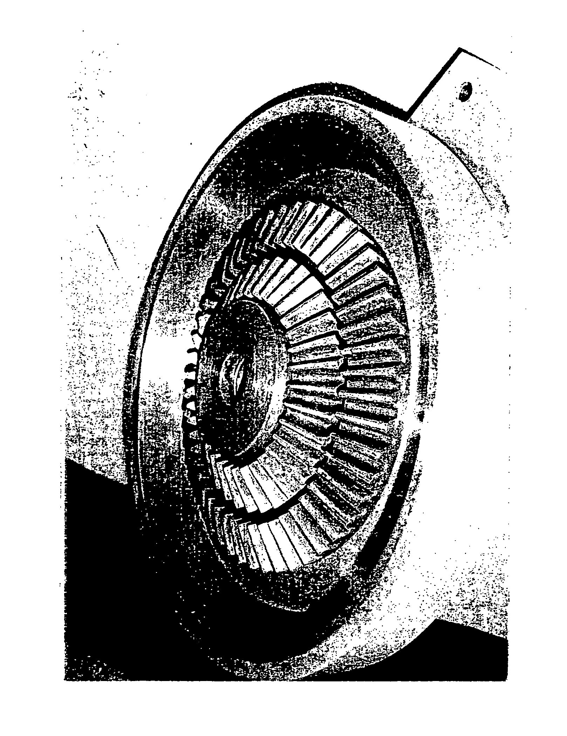

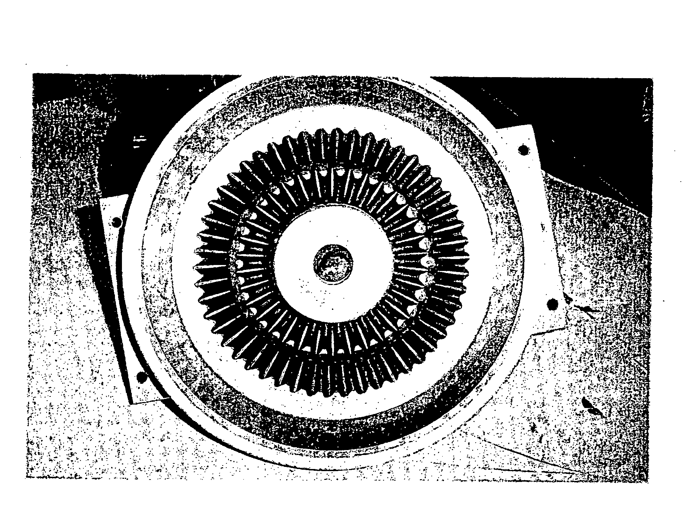

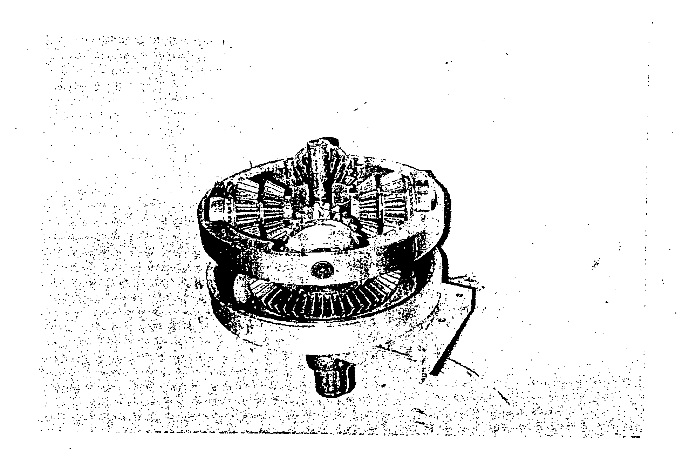

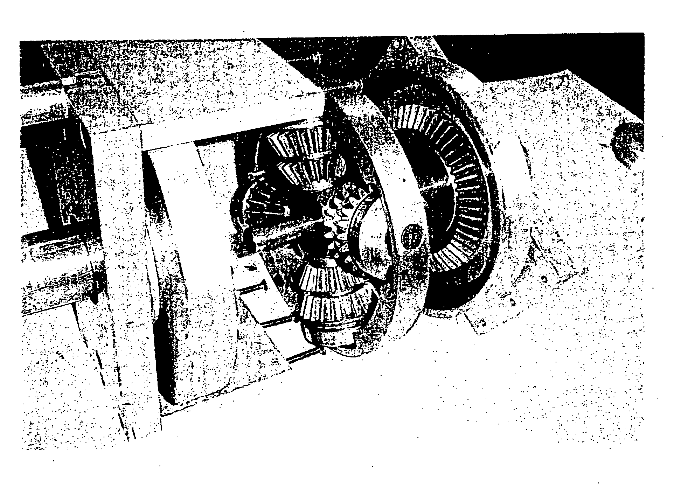

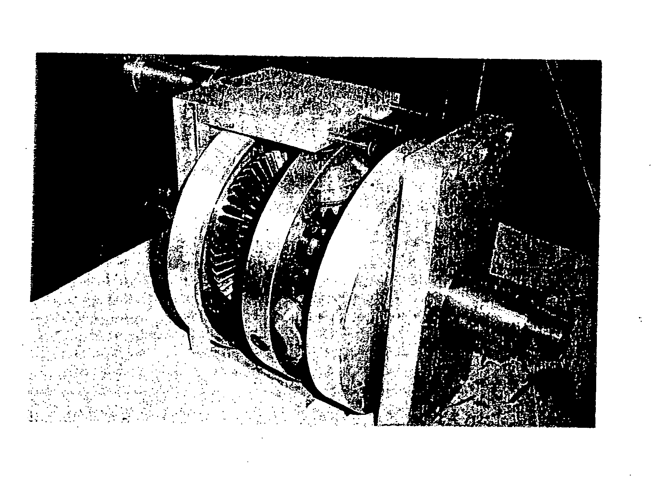

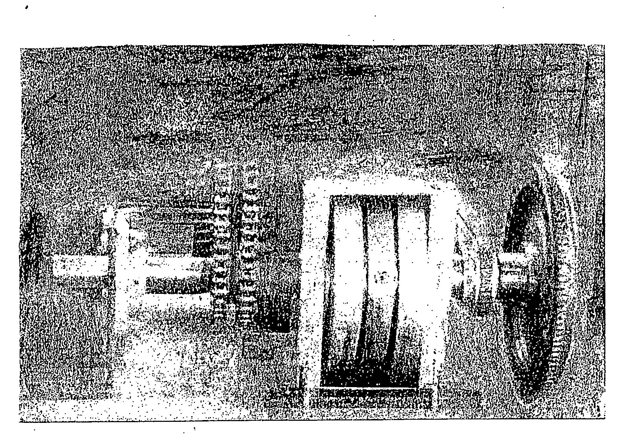

Second solution: three gear pairs with straight or helical teeth or with chain gearing, as it can be seen in (FIG. 5). This gear train will be applied in the place of that marked with number 30 and of that marked with number 31 in (FIG.4).

In this case the shaft 37, integral with the wheel 42, becomes driving. The rotation motion will pass from the wheel 42 to the integral pair 43 44 and, through the latter, to the integral pair 45 and 46 and then to the wheel 33, integral with the crown wheel plate 17.

Considering the product of the numbers of teeth of the driving wheels 100 x100 x 100 and that of the driven wheels 91 x 99 x 111, this gear train lets us obtain 999.999 reductions.

Also in this case the above mentioned observations included in a, b, c are to be referred to. It is to be remembered that the integral pair 43 and 44 is freely rotating on the shaft 21 and the integral pair 45 and 46 is freely rotating on the shaft 37.

Third solution: four gear pairs with straight or helical teeth or with a chain gearing, as it is shown in (FIG.6).

In this-case, the driving shaft 21 is integral with the wheel 47. The integral pair 50 51 is freely rotating on the shaft 21 while the integral pairs 48 49 and 52 53 are freely rotating on the shaft 37.

It is now clear that the rotary motion will pass from the wheel 47 to the pair 48 49, from the latter to the pair 50 51 and from this to the pair 52 53 and, at last, to the wheel 33, integral with the crown wheel plate 17.

Assuming that the product of the numbers of teeth of the driving wheels is 100 x 100 X 100 x 100 and that of the driven wheels 73 x 99 x 101 x 137, this gear train allows to obtain 99.999.999 reductions. Also in this case the observations mentioned above and included in a, b and c are to be referred to.

In practice so many reductions are of no use but it has been shown that they can be obtained. Therefore we believe to have solved a problem, that until now has never been faced, and claim for a full and functional application of the invention related to it.

### RUNNING OF THE CONTINUOUS VARIABLE TRANSMISSION

It is here to be noticed that this invention allows to apply the friction either on the driving part or on the driven one, as well as it allows its total elimination, with the replacement of an already used hydraulic coupling. So its assembly is completely referred to the Manufacturer's will.

In this patent we want to analyze a gear shift mechanism with friction clutch, which is currently used, and a continuous transmission system, with an added application of an electric coupling, transmitted with trapezoid belt, as it is described below.

All pieces, including the satellites, the side gears, the crown wheel plates, the driving shaft, the driven shaft, the gear trains, are assembled in a double housing 9 32. The kinematic mechanism forms a double conical epicyclic train, as it is shown in (FIG.4).

This assembly is equal to that, already described, for the running or the reducer, with some changes analyzed below.

The rotary motion will be transmitted to the shaft 21, which becomes driving shaft, through a friction system, which is currently used, and which is not reported in (FIG.4).

The syncronizer 28, operated by the lever 29, being in a neutral position, will have the function of keeping the engine neutral.

The wheels 38 26, as it has been above said, are keyed on the driving shaft 21 and so they are driving wheels. The wheel 35 forms a whole body with the shaft 37, while the wheels 36 and 27 are freely rotating on this shaft.

The synchronizer 28, when it is connected with the wheel 36, operates the gear train 30 which consists of the wheels 38 36 35 33.

On the contrary, when it is connected with the wheel 27, it operates the gear train 31 which consists of the wheels 26 27 35 33 (FIG.4)

The crown wheel plate 17, concentric with the driving shaft 21, through the gear train 30 or the gear train 31, also becomes a driving body.

The gear train 30 will be used for the normal speed, also using, between the driving shaft 21 and the driven shaft 22, a quite big number of reductions.

These reductions will be studied together with the mechanic characteristics of the engine and the components of the fuels being used, in order to obtain the maximum pressure operating on the pistons. The difference of rotations, between the driving shaft 21 and the wheel 33, which is a whole body with the crown wheel plate 17, will pass, through the group of the satellites 13, from the driving shaft 21 to the driven shaft 22 turning in the same direction of the driving shaft 21. It is here underlined that for the application of the kinematic mechanism to the velocity shift, these shafts 21 and 22 must necessarily turn in the same direction (FIG.4).

A one way brake 34 will be mounted on the crown wheel plate 18, which is concentric with the driven shaft 22. The hub 40 of this one way brake will be connected with the crown wheel plate 18 and will turn, with the latter, in the same direction of the driven shaft 22. The external ring 41 of the one way brake 34 will be adequately fixed to the housing 9 and so it will be kept immobile.

The aim of this one way brake is that of avoiding that the crown wheel plate 18 could turn in the opposite direction in respect of the driven shaft 22, as soon as the vehicle starts moving. The Manufacturer can however use a different solution, according to the assembly needs and practical applications.

The difference of rotations, which we have described above represents the first and only gear of the vehicle.

This means that the force, produced by the engine, will be directly proportional to acceleration and so to the speed of the vehicle. So the fundamental equation of dynamics is verified: (F=m x a):

It is to be observed that the force, transmitted by the driving shaft 21, will pass either to the driven shaft 22 or the driven crown wheel plate 18. The part of the force which will pass to the driven crown wheel plate 18 is in counterthrust, that is it will be opposite the rotation direction of the driven shaft 22 and so it will hinder the acceleration of the vehicle.

We have above said that such a force, on the crown wheel plate 18, will decrease as bigger is the number of reductions transmitted by the driving shaft 21.

In order to neutralize such a counterthrust and to foster the acceleration of the vehicle, on the driven crown plate 18 it will be applied hydraulic or electric coupling, according to the Manufacturer's will, shown by the box 39 in the (FIG.4).

In this patent we consider an electric coupling, applied to the driven crown wheel plate 18, developed by a generator, operated by the engine. Such a coupling is shown in (FIG.4) with the pulley 24, dragged by a trapezoid belt 25.

So the rotations of the driven crown wheel plate 18, summed up with those of the driven shaft 22, will steadily increase until the velocity of the driving crown wheel plate 17 is reached. So, these crown wheel plates 17 and 18 will be able to overcome each other, as regards velocity.

The following important observation must be made at this point. With this kinematic mechanism the moments of the forces do not change: the driving one and the resistant one. They will be in continuous dynamic balance. So we can affirm that, with this invention no difference will exist anymore between the force and the moment of the force, during acceleration, in vehicles.

So, the idea of power must be changed. With the present invention we speak about a force and not about a driving coupling, since that the crank will be used only to transform the alternating motion of the piston into the rotary motion of the driving shaft.

So we can deduce that the idea of driving coupling and power, as well as the formula of kinetic energy, have to be revised.

As a consequence of what we have affirmed, the tractive efforts, the stresses, the tearings of the all mechanic parts will be considerably reduced and so the stability of the vehicle will be increased.

The engine will be also more powerful and more silent, it will consume much less fuel and will last for long.

We have above said that the gear train will allow to obtain high reductions, in order to take advantage of the maximum front drive force of the engine and then they are very good for the normal speed ride. However, during steep slopes, high reductions at the wheels of the vehicle, so a high speed of the engine, will cause a strong braking action of the latter, and so the vehicle is bound to stop. We can get round it with a smaller number of reductions to be transmitted to the driven shaft 22, studied according to the characteristics of the engine and the vehicle.

For this goal the gear train 31 will be used (FIG.4).

When the synchronizer 28 is connected with the wheel 27, such a gear train will be formed by the wheels 26 27 35 33 and the number of reductions will be lower than that of the gear train 30, about which we have discussed above.

Such a gear train will allow the engine to balance the thrust coming from the vehicle during the slopes. By also considering the resistance which opposes the electric engine to the force transmitted by the pulley 24, a good braking can be guaranteed. This gear train will also be used for the possible start, by thrust, of the engine.

It is also to be observed that the driven crown wheel plate 18 (FIG.4) could be slowed down or really stopped with a special brake (not shown in FIG.4). In this case, during steep slopes, it will be possible to adjust the speed of the vehicle through a right speed of the engine, so obtaining, at the same time, the maximum braking action needed by the road conditions.

What we have above said will be easily solved and therefore no particular description is thought to be necessary.

As regards the reverse motion, the already used system will be kept. However, if we reflect upon what we have affirmed above, included in letter b, the Manufacturer can also apply, if he will find it right, the above said reverse motion on the driving shaft 21, by keeping the driven crown wheel plate 18 immobile.

The reduction system will be such as to allow the driving shaft 21 and the driven shaft 22 to turn in the opposite direction, as it has already been shown. This is another important characteristic to be taken into consideration.

Furthermore, if the Manufacturer will decide to eliminate the one way brake 34 on the crown wheel plate 18, the reverse motion can also be easily obtained, by inverting the rotations of the rotator (FIG.4).

In this case it will also possible to keep the engine neutral, by stopping the electric circuit.

Such solutions are very simple, therefore no special description is thought to be necessary.

A common claw clutch or any other kind of clutch, according to the Manufacturer's will, will be applied to the driven shaft 22, after the pulley 24, and it is shown with the box 54 (FIG.4). It has the function of declutching the propeller shaft of the vehicle wheels from the driven shaft 22.

Declutching is important either for manually pushing the vehicle in both directions or for applying to the pulley 24, the trapezoid belt 25, in case it would break. This system is merely indicatory.

We thought it not necessary to report it in (FIG.4).

We affirm, at the end of what we have above described, that in the transformation of thermal energy into mechanical energy, time cannot be left out of consideration. That is the more rapidly the transformation occurs, the less loss of heat takes place.

That is why, as we have described it, the only reduction given by the wheels of the gear train 38 36 35 33, should be high enough in order to allow the piston to run at the same velocity of gas expansion.

So the maximum force operating on it and produced by this expansion can be exploited.

It has been experimentally observed that, within certain limits, any number of reductions, from the driving shaft 21 to the driven shaft 22, does not change the transmissed force, under the same speed of the engine. This is another important characteristic of the invention.

It is however right what has been affirmed before: the number of reductions will be studied according to the characteristics of the engine and the kind of fuels used.

The engine will consume much less fuel and will less pollute the atmosphere. The advantages are many and enormous. This kinematic mechanism can concern a large field of mechanical engineering in general. It can be applied to the field of cars, ships, airplanes and to any machine which uses a high velocity ratio. It can be applied to machine tools, weaving, lifter, operating, electric machines, etc. So we think to have solved a problem which has never been solved until now and we claim this total functional invention for the solution of this problem.

The Manufacturer will be free to carry out the changes he thinks it right to do, but the principle and the aim, of this invention, will be the same and are impossible to be, changed, as here they have been above described in detail and claimed as follows.

### DESCRIPTION OF THE PHOTOS

The photo I includes:
- the bearing axle brace hub
- the group of central satellites
- the group of peripheral satellites
- the thrust bearings, housed in the covers, (see other photos) for supporting the weight of the cruciform reducer
- holding ring

The sectional view photo II includes:
- one of the two planetary pinions
- one of the two planetary plates
- one of the two bearing covers (concentric with the plates)

The front view photo III includes:
- the same pieces described in the photo II

The photo IV includes:
- the same pieces described in the photos I II III

The whole group is being assembled

The photos V and VI include:
- both the planetary pinions
- both the planetary plates
- both the bearing covers (concentric with the plates)
- the group described in photo I

The whole group is being assembled

The photo VII includes:
- The total assembly of the kinematic mechanism, the reduction system of which, with chain gearing, has been calculated as follows:
- the product of the numbers of teeth of the driving gears has been given by 22 x 22
- the product of the numbers of teeth of the driven gears is given by 24 x 20
- the number of reductions, from the driving shaft to the driven shaft, will be then equal to 120 and these shafts turn in the same direction

It has experimentally observed that, within certain limits, the number of reductions does not change the transmitted force, with the same engine speed.

We confirm what we have affirmed in the description of the patent: the number of reductions will produce more efficiency if it is studied according to the characteristics of the engine and the kinds of fuels used.

Notice the little electric coupling applied on the driven plate.

## Claims

1. A kinematic mechanism including:
- a cross-brace with four radial axles (11);
- two groups of satellite pinions (13,15), one (13) of them is central and interacts with two side gears (19,20), and the other ( 15) is peripheral and interacts with two crown wheel plates (17, 18), these groups are close in a holding ring (16) and rotate on a perpendicular level with respect to the axis of a driving and a driven two shafts (21-22);
- said two crown wheel plates (17,18), one of them (17) is driving and the other (18) is driven;
the driving shaft (21) on which a side gear (19) is keyed, supporting the driving crown wheel plate (17), concentric with it and revolving in the hub of the latter;
the driven shaft (22), on which a second side gear (20) is keyed, axis coinciding with the driving shaft (21) supporting the driven crown wheel plate (18) concentric with it and revolving in the hub of the latter, **characterised in that**:
- two bearing covers (X), connected with the respective crown wheel plates (17-18), fit for supporting the weight of the cruciform set.

2. Kinematic mechanism as claimed by claim 1, **characterised in that**
- a first gear train (30) comprising a first driving wheel (38) and a first driven wheel (36);
- a second gear train (31)comprising a second driving wheel (26) and a second driven wheel (27);
a third gear train comprising a third driving wheel (35) and a third driven wheel (33).
This kinematic mechanism concerns an angular velocity reducer. By utilizing the first gear train (30), we can achieve the reduction the revolutions, from the driving shaft (21) to the driven shaft (22), by means of the difference between the product of the numbers of teeth of the first and third driving wheels (38, 35) and that of the numbers of teeth of first and third driven wheels (36,33), If, instead of the first gear train (30), we use the second gear train (31), we can achieve the above said reduction of revolutions by means of the difference between the product of the numbers of teeth of the second and third driving wheels (26,35) and that of the numbers of teeth of the second and third driven wheels (27,33).

3. Kinematic mechanism as claimed by claim 1, **characterised in that**:
- A one brake (34). The use of this one way brake is that of avoiding that the driven crown wheel plate (18) could turn in the opposite direction in respect of the driven shaft (22), as soon as the vehicle starts moving.
- An electric coupling (39) to be applied to the driven crown wheel plate (18). This electric coupling is important to neutralize the counterthrust and to foster the acceleration of the driven shaft (22) and so of a linked fly-wheel or vehicle.

## Patentansprüche

1. Eine kinematische Vorrichtung mit:
- einer Querstrebe mit vier radialen Achsen (11);
- zwei Gruppen Planetenritzel (13, 15), eine davon (13) ist zentral und wirkt auf die beiden seitlichen Zahnräder (19, 20), und die andere (15) ist umlaufend und wirkt auf zwei Tellerräder (17, 18), diese Gruppen werden von einem Haltering (16) umschlossen und drehen sich in einer Ebene, die senkrecht zur Achse einer antreibenden und einer angetriebenen Welle (21, 22) liegt;
- die beiden besagten Tellerräder (17, 18), eins davon (17) treibt an und das andere (18) wird angetrieben; - die Antriebswelle (21), auf der ein Kegelrad (19) sitzt, das das antreibende Tellerrad (17) trägt, konzentrisch dazu ist und sich in der Nabe letzterer dreht;
- die angetriebene Welle (22) auf der ein zweites Kegelrad (20) sitzt, die Achsen stimmen mit der der Antriebswelle (21) überein, trägt das angetriebene Tellerrad (18), ist konzentrisch dazu und dreht sich in der Nabe letzterer; **dadurch gekennzeichnet, dass**:
- zwei Lagerabdeckungen (X) verbunden mit dem jeweiligen Tellerrad (17-18), geeignet, das Gewicht des kreuzförmigen Aufsatzes zu tragen.

2. Kinematische Vorrichtung, nach Anspruch 1, **dadurch gekennzeichnet, dass**:
- eine erste Stufe (30), mit einem ersten Antriebsrad (38) und einem ersten angetriebenen Rad (36).
- eine zweite Stufe (31), mit einem zweiten Antriebsrad (26) und einem zweiten angetriebenen Rad (27), eine dritte Stufe mit einem dritten Antriebsrad (35) und einem dritten angetriebenen Rad (33).
Diese kinematische Vorrichtung betrifft einen Drehzahlreduzierer/Untersetzung; unter Verwendung der ersten Stufe (30) können wir von der Antriebswelle (21) zur Abtriebswelle (22) eine Verringerung der Drehzahl erreichen, über die Differenz zwischen dem Produkt der Zahnzahlen der ersten und dritten Antriebsräder (38, 35) und der Zahnzahlen der ersten und dritten angetriebenen Räder (36, 33).
Wenn wir anstelle der ersten Stufe (30) die zweite Getriebestufe (31) verwenden, können wir die oben genannte Verringerung der Drehzahl mittels der Differenz zwischen dem Produkt der Zahnzahlen der Antriebsräder (26, 35) und der Anzahl der zweiten und dritten angetriebenen Räder (26, 35) bzw. der Zahnzahlen der zweiten und dritten angetriebenen Räder (27, 33) erreichen.

3. Kinematische Vorrichtung, nach Anspruch 1, **dadurch gekennzeichnet, dass**:
- eine Einwegbremse (34). Diese in eine Richtung wirkende Bremse dient dazu, zu verhindern, dass sich das angetriebene Tellerrad (18) in entgegengesetzter Richtung von der der Abtriebswelle (22) dreht, sobald sich das Fahrzeug in Bewegung setzt.
- Eine elektrische Kupplung (39) angebracht am angetriebenen Tellerrad (18). Diese elektrische Kupplung ist wichtig zur Neutralisierung des Gegenstoßes und zur Übertragung der Beschleunigung der Antriebswelle (22) und mithin eines verbundenen Schwungrads oder Fahrzeugs.

## Revendications

1. Un mécanisme cinématique comprenant.
- Une barre transversale avec quatre essieux radiaux (11);
- Deux groupes de pignons satellites (13,15), l'un (13) d'entre eux est au centre et interagit avec deux roues dentées latérales (19,20), et l'autre (15) est périphérique et interagit avec deux plaques de roues entraîneuses (17,18), ces groupes sont fermés dans un anneau de fixation (16) et pivotent sur un niveau perpendiculaire par rapport à l'axe d'un arbre de commande et d'un arbre commandé (21, 22);
- l'une des deux plaques susdites des roues de couronne (17,18) est une plaque de commande (17) tandis que l'autre plaque (18) est une plaque commandée;
- l'arbre de commande (21) sur lequel est calée une roue dentée latérale (19), supportant la plaque de commande des roues de couronne (17), concentrique avec celle-ci et tournant dans le moyeu de ce dernier;
- l'arbre commandé (22) sur lequel est calée une deuxième roue dentée (20), axe qui coïncide avec l'arbre de commande (21) supportant la plaque commandée des roues de couronne (18), concentrique avec celle-ci et tournant dans le moyeu de ce dernier, est **caractérisé en ce que**:
- deux couvercles de palier (X) sont connectés avec les plaques respectives des roues de couronne (17-18), aptes à supporter le poids de l'ensemble cruciforme.

2. Mécanisme cinématique, selon la revendication 1, **caractérisé par**:
- un premier train d'engrenages (30), comprenant une première roue entraîneuse (38) et une première roue entraînée (36).
- un deuxième train d'engrenages (31), comprenant une deuxième roue entraîneuse (26) et une seconde roue entraînée (27); un troisième train d'engrenages comprenant une troisième roue entraîneuse (35) et une troisième roue entraînée (33).
Ce mécanisme cinématique concerne un réducteur de vitesse angulaire; en utilisant le premier train d'engrenages (30), on peut atteindre la réduction de révolutions, de l'arbre de commande (21) à l'arbre commandé (22), au moyen de la différence entre le produit du nombre de dents de la première et troisième roue entraîneuse (38, 35) et de celui du nombre de dents de la première et de la troisième roue entraînée (36,33).
Si, au lieu du premier train d'engrenages (30), on utilise un deuxième train d'engrenages (31), on peut atteindre la susdite réduction de révolutions par la différence entre le produit du nombre de dents des roues entraîneuses (26 , 35) et celui du nombre de la deuxième et troisième roue entraînée (26,35) et celui du nombres de dents de la deuxième et troisième roue entraînée (27, 33).

3. Mécanisme cinématique, selon la revendication 1, **caractérisé par**:
- Un frein unidirectionnel (34). L'utilisation de ce frein unidirectionnel est d'éviter que la plaque entraînée des roues de couronne (18) puisse tourner dans la direction opposée par rapport à l'arbre commandé (22), dès que le véhicule commence à bouger.
- Un couplage électrique (39) à appliquer à la plaque commandée des roues de couronne (18). Ce couplage électrique est important pour neutraliser la contre-butée et favoriser l'accélération de l'arbre commandé (22) et ainsi d'un volant relié ou d'un véhicule.
